# NEUE EUROPÄISCHE PATENTSCHRIFT

(11) **EP 2 511 580 B2**
(45) Veröffentlichungstag und Bekanntmachung des Hinweises auf die Entscheidung über den Einspruch: **25.11.2020**
(45) Hinweis auf die Patenterteilung: 29.05.2013
(21) Anmeldenummer: 11002284.5
(22) Anmeldetag: 21.03.2011
(51) Int. Cl.: F16L 5/10, E04G 15/06

(54) **Durchführung zum Einbau in ein Wand- oder Bodenelement**
Feed-through for installation in a wall or floor element
Passage destiné à l'intégration dans un élément de paroi ou de sol

(43) Veröffentlichungstag der Anmeldung: 17.10.2012
(73) Patentinhaber: Hauff-Technik GmbH & Co. KG, 89568 Hermaringen (DE)
(72) Erfinder: Kurz, Ralf, 89537 Giengen (DE); Heck, Martin, 89447 Zöschingen (DE)
(74) Vertreter: Szynka, Dirk

(56) Entgegenhaltungen:
- EP-A2- 1 865 584
- WO-A1-2004/034538
- DE-A1- 2 411 521
- DE-A1- 3 527 220
- DE-C- 958 671
- DE-C1- 4 427 603
- DE-U1- 8 700 714
- GB-A- 2 171 139
- JP-A- 2004 036 224
- US-A- 4 342 462
- US-A- 5 043 536
- US-A- 5 309 688
- US-A- 5 711 536
- US-B1- 6 386 550

## Beschreibung

Die vorliegende Erfindung betrifft eine zum Einbau in eine Wand- oder Bodenelement vorgesehene Durchführung mit einem Rohrelement, durch weiches eine Leitung hindurchführbar ist.

Solche auch als Schachtfutter bekannten Durchführungen werden gemäß dem Stand der Technik mit einem Rohrelement aus Faserzement ausgeführt, welches nach dem Einbau der Durchführung zwischen zwei Seiten des Wand- oder Bodenelements eine Durchgangsöffnung freihält. Durch diese kann anschließend eine Leitung geführt werden, die dann beispielsweise mit einem eingeschobenen Dichtkörper gegen das Rohrelement gedichtet wird.

Die GB 2 171 139 A zeigt eine Durchführung zum Einbetonieren in eine Wand; an einem Rohrelement der Durchführung ist ein sich nach außen erhebender, zum Verbinden mehrerer Durchführungen ausgelegter Steg vorgesehen, und zwar an einem Ende des Rohrelements.

Die DE 958 671 C offenbart einen Rahmen aus Profileisen, an dem ebenfalls ein sich nach außen erhebender Steg vorgesehen ist, der zum Einbau des Rahmens in einer Stahlwand mit dieser verschweißt wird.

Die US 6,386,550 B1 zeigt ein Rohrelement zum Einbetonieren in eine Wand, an dem zur Befestigung des Rohrelements an einem Stahlgitter außenseitig Befestigungselemente vorgesehen sind.

Die DE 87 00 714 U1 zeigt eine Durchführung zum Einbau In eine Wand mit zwei Ineinander angeordneten Rohrstücken, die über einen sich von dem inneren zu dem äußeren Rohrstück erstreckenden Flansch verbunden sind. In einer Ausgestaltung weist das äußere Rohrstück auch einen an die Wandaußenseite grenzenden Flansch mit zueinander komplementären Formschlusselementen auf.

Die Aufgabe der vorliegenden Erfindung ist es, eine Durchführung mit verbesserten Gebrauchs- und Funktionseigenschaften anzugeben.

Erfindungsgemäß löst diese Aufgabe eine Durchführung nach Anspruch 1.

Über solche Verbindungselemente können so eine Mehrzahl (also mindestens zwei) Durchführungen zu einem Modul mit entsprechend einer Mehrzahl sich beispielsweise in etwa parallel erstreckenden Rohrelementen zusammengesetzt und dann auch gemeinsam in das Wand- oder Bodenelement eingebaut werden, beispielsweise durch ein weiter unten näher erläutertes Vergießen mit fließfähigem und dann erstarrendem Material. Hierbei kann vorteilhafterweise entweder das Modul als Ganzes oder zunächst eine einzelne Durchführung in einer Schalung positioniert und ausgerichtet werden, wobei im letztgenannten Fall Steg und Verbindungselement bereits die Position einer weiteren Durchführung vorgeben; im Gegensatz zum Stand der Technik muss also nicht notwendigerweise jede Durchführung einzeln ausgerichtet werden, was den Aufwand beim Einbau reduzieren hilft.

Die Verbindbarkeit der Durchführungen betrifft zumindest ein Paar, vorzugsweise eine beliebige eindimensionale Reihe und besonders bevorzugter Weise eine zweidimensionale Anordnung.

Der Steg mit dem Verbindungselement ist erfindungsgemäß zu den Enden des Rohrelements beabstandet, ist also nach dem Einbau innerhalb des Wand- oder Bodenelements angeordnet. Neben möglichen optischen Vorteilen - der Steg und auch das Verbindungselement sind idealerweise an keiner Seite des Wand- oder Bodenelements sichtbar - bietet die Anordnung innerhalb auch einen Schutz, beispielsweise vor später auf eine Außenseite wirkenden Witterungs- bzw. Feuchteeinflüssen.

Die senkrechte Projektion des Stegs auf das Rohrelement ist erfindungsgemäß zu den Rohrenden beabstandet, und zwar vorzugsweise, auf die in Rohrrichtung gemessene Länge des Rohrelements bezogen, jeweils um in dieser Reihenfolge zunehmend bevorzugt mindestens 5, 10, 15, 20, 25, 30, 35 % der Rohrlänge. Dabei erfolgt die Projektion senkrecht zu einer (zur Rohrrichtung parallelen) Mittenachse des Rohrelements, also etwa im Falle eines Rohrelements mit kreisförmigem Querschnitt auch senkrecht auf die (näherungsweise als glatt ausgebildet angenommene) Außenwand des Rohrelements. Ein Rohrelement mit kreisförmigem Querschnitt ist bevorzugt, wenngleich auch eine andere Querschnittsform möglich ist, etwa eine rechteckige.

Aufgrund des zu den Rohrenden beabstandeten Stegs sind die Rohrelemente eines Moduls dann auch nicht in einem endseitigen, nahe den Rohrenden liegenden Bereich, sondern bezogen auf die Rohrrichtung eher mittig miteinander verbunden. Sie erstrecken sich ansonsten - von gegebenenfalls der Montage in Wand- oder Bodenelement dienenden Vorrichtungen abgesehen - vorzugsweise voneinander getrennt. Dies gewährleistet eine gewisse Stabilität des Durchführungsmoduls, etwa wenn bei einem Vergießen in ein Wand- oder Bodenelement das auf ein Rohrelement treffende Material einen Kraftübertrag bewirkt. Durch eine in etwa mittige Anordnung der Verbindungselemente und eine dementsprechend etwa mittige "Aufhängung" des Rohrelements kann dann zumindest näherungsweise ein Ausgleich der auftretenden Hebelkräfte erreicht werden.

Sofern in der vorliegenden Offenbarung auf eine Leitung Bezug genommen wird, impliziert dies nicht, dass auch tatsächlich eine Leitung hindurchgeführt sein muss. Ferner wird von einem Einbau in ein Wand- oder Bodenelement gesprochen, wenngleich dieses Wand- oder Bodenelement, was auch bevorzugt ist, mit dem Einbau auch erst entstehen kann. Der Einfachheit halber wird im Folgenden nur noch auf ein Wandelement Bezug genommen und soll dieses stellvertretend auch für ein Boden-element stehen.

Bei der Leitung kann es sich auch um eine Gas-, Wasser- oder Wärmeleitung handeln, wobei eine Strom-, Telekommunikations-, Signal- oder Datenleitung bevorzugt ist.

Bevorzugte Ausgestaltungen der Erfindung sind in den abhängigen Ansprüchen angegeben, wobei wie in der gesamten Offenbarung nicht im Einzelnen zwischen der Beschreibung der Durchführung, eines Verfahrens zu deren Herstellung sowie des Verwendungsaspekts der Erfindung unterschieden wird; die Offenbarung ist implizit im Hinblick auf sämtliche Kategorien zu verstehen.

Erfindungsgemäß ist das Verbindungselement doppelt als ein erstes und ein dazu komplementäres zweites Formschlusselement vorgesehen. Sofern vorzugsweise an einem einzigen Steg sowohl ein erstes als auch ein zweites Formschlusselement vorgesehen sind, lässt sich ein Durchführungsmodul vorteilhafterweise auch aus nur einem einzigen Durchführungstyp aufbauen.

Einerseits kann durch die formschlüssig ineinandergreifenden Verbindungselemente, die etwa über einen Steck- oder Klemmmechanismus zusammenhalten, die Handhabbarkeit vereinfacht werden, etwa weil keine Schraube ein- bzw. Mutter aufgesetzt werden muss. Andererseits kann so beispielsweise auch die Zahl an Einzelteilen und damit die Gefahr eines Verlusts, etwa nach der Entnahme aus einer Verpackung und vor dem Einbau in das Wandelement, verringert werden.

Dies gilt insbesondere auch für einen erfindungsgemäß einstückig mit dem Rohrelement ausgebildeten Steg und ein vorzugsweise einstückig mit Steg und Rohrelement ausgebildetes Verbindungselement.

Auch im Hinblick auf die Einstückigkeit ist für das Rohrelement, den Steg und das Verbindungselement ein Kunststoffmaterial bevorzugt, was gegenüber anderen Materialien, etwa Metall oder Faserzement, auch Kostenvorteile bietet. Ferner können sich gegenüber den eingangs erwähnten Schachtfuttern aus Faserzement aber auch gegenüber Durchführungen aus Metall auch Gewichtsvorteile ergeben, was beispielsweise die Handhabung vereinfachen und Transportkosten reduzieren helfen kann.

In bevorzugter Ausgestaltung ist der Steg als umlaufende Stegdichtung ausgebildet, erfüllt dieser also vorteilhafterweise eine Doppelfunktion einerseits als Verbindung von Durchführungen zu einem Modul und andererseits, um Kriechpfade entlang der Außenseite des Rohrelements zu blockieren bzw. verlängern.

In diesem Zusammenhang kommt auch besonders vorteilhaft zum Tragen, dass der Steg bzw. die Stegdichtung erfindungsgemäß innerhalb des Wandelements angeordnet sind, weil so im Falle eines nicht auf Rohrelement und Stegdichtung haftenden Wandelementmaterials und eines dementsprechenden Spalts dazwischen die "Höhe" der Stegdichtung, also der Abstand eines freien Rands der Stegdichtung zu dem Rohrelement, zweifach zur Kriechwegsverlängerung ausgenutzt wird; würde die Stegdichtung anderenfalls an eine Seite des Wandelements grenzen, könnte an dem freien Rand der Slegdichtung Feuchtigkeit eindringen und würde der Kriechweg dementsprechend nur etwa um die einfache Höhe der Stegdichtung verlängert.

In weiterer Ausgestaltung hat die Stegdichtung in Rohrrichtung gesehen eine polygonförmige Außenform und ist mit entsprechend polygonförmigen Stegdichtungen weiterer Durchführungen sich flächig ergänzend zusammenbaubar. Die von den Stegdichtungen gebildete und von den Rohrelementen abgesehen vorzugsweise durchgehende Fläche ist dann innerhalb des Wandelements, beispielsweise im Wesentlichen parallel zu zwei einander entgegengesetzten Seitenflächen davon, angeordnet.

Bevorzugt ist eine Stegdichtung mit einer in Rohrrichtung gesehen rechteckigen, besonders bevorzugt quadratischen, Außenform, wobei das Verbindungselement auf einer Seitenlinie des Rechtecks angeordnet ist, und zwar in bevorzugter Ausgestal-tung näher an einer der beiden an der Seitenlinie liegenden Ecken als an der anderen, also in einem Eckbereich. Im Falle eines in Rohrrichtung gesehen mittig in dem Rechteck sitzenden Rohrelements ist in den Ecken der Abstand des freien Rands der Stegdichtung zu dem Rohrelement am größten, steht also dementsprechend Raum für das Verbindungselement zur Verfügung.

Andererseits kann mit vorzugsweise zwei Verbindungselementen je Seitenlinie, die jeweils in einem Eckbereich vorgesehen sind, ein besonders stabil zusammenbaubares Durchführungsmodul realisiert werden, weil so im Falle eines flächigen Zusammenbaus die jeweils an bis zu drei weitere Durchführungen grenzenden Eckbereiche stabilisiert werden.

Bei einer weiteren Ausführungsform ist an einem sich von dem Rohrelement weg erhebenden, ersten Abschnitt der Stegdichtung ein zweiter, sich entlang der Rohrrichtung von dem ersten Abschnitt weg erstreckender Abschnitt vorgesehen; vorzugsweise erstreckt sich der zweite Abschnitt T-förmig in zwei Richtungen (jeweils in Rohrrichtung) von dem ersten Abschnitt weg. Dadurch werden zunächst schon die zuvor beschriebenen und bereits durch den ersten Abschnitt der Stegdichtung verlängerten Kriechwege weiter verlängert.

Ferner haben die Erfinder festgestellt, dass ein entsprechender zweiter, sich in Rohrrichtung erstreckender Abschnitt der Stegdichtung insbesondere auch bei einem Einbau mit fließfähige und beim Erstarren schrumpfenden Material Vorteile haben kann, weil bei einem Abheben des Wandelementmaterials von dem Rohrelement zwischen der dem Rohrelement gegenüberliegenden Seite des zweiten Abschnitts und dem Wandelementmaterial noch immer ein Kontakt bestehen bleiben kann; das Wandelementmateriel kann durch den Schrumpf gegebenenfalls sogar gegen den zweiten Abschnitt "gezogen" werden.

Aufgrund dieser Ausgestaltung kann die Stegdichtung beispielsweise auch aus einem harten, also auf eine Krafteinleitung im Wesentlichen verformungsarm reagierenden, Material gefertigt werden, etwa aus einem Kunststoffmaterial mit Acryl-Buthadlen-Styrol.

Wenn in bevorzugter Ausgestaltung Rohrelement und Stegdichtung aus demselben harten Material gefertigt sind, hält das Rohrelement einerseits einem gewissen Druck beim Vergießen Stand und dementsprechend eine Durchgangsöffnung frei. und verlängert bzw. blockiert die Stegdichtung andererseits bei entsprechender Ausgestaltung geometriebedingt Kriechwege - trotz einer harten und dementsprechend im Falle eines schrumpfenden Wandelementmaterials im Wesentlichen nicht nachfedernden Stegdichtung. Es kann also beispielsweise auf zusätzliche außenseitig angeordnete Dichtelemente aus elastischem Material verzichtet werden, was auch in Kostenhinsicht vorteilhaft sein kann.

Sowohl in Kostenhinsicht als auch hinsichtlich der Handhabbarkeit bietet auch eine weitere bevorzugte Ausführungsform Vorteile, bei welcher in dem Rohrelement eine das Rohrelement verschließende, einstückig mit dem Rohrelement ausgebildete Trennwand vorgesehen ist. Diese dient als Blindverschluss, sodass die Durchführung auch für ein gegebenenfalls erst späteres, also zunächst optionales, hindurchführen einer Leitung vorgesehen werden kann, was insbesondere im Falle eines Durchführungsmoduls mit einer Mehrzahl Rohrelemente die Anwendungsmöglichkeiten eines einzigen Typs Wandelement vervielfacht und deshalb beispielsweise auch bei Fertigbauteilelementen besonders vorteilhaft ist.

Würde anderenfalls ein Rohrelement ohne Trennwand, also ohne Blindverschluss, optional vorgesehen werden, müsste es mit einem zusätzlichen Dichtelement, beispielsweise einer in das Rohrelement eingeschobenen, als Blindstopfen dienenden Pressdichtung, gedichtet werden, was zusätzliche Kosten verursacht und den Vorhalt bzw. die Handhabung zusätzlicher Bauteile notwendig macht.

Im Allgemeinen ist zur Herstellung der Durchführung ein formendes Verfahren bevorzugt, bei dem einer von einem Formwerkzeug gebildeten Kavität dann die Form der Kavität annehmendes Kunststoffmaterial zugeführt wird und das Formwerkzeug die Durchführung, beispielsweise nach einem beim Erkalten Erstarren eines zuvor bei erhöhter Temperatur fließfähigem Kunststoffmaterials oder nach einer Reaktion des Kunststoffmaterials, freigibt. Die Durchführung kann also beispielsweise spritzgegossen werden, was bevorzugt ist; gleichwohl sollen, sofern im Folgenden auf eine "spritzgegossene Durchführung" Bezug genommen wird, auch formgebende Verfahren in der eben beschriebenen Allgemeinheit erfasst sein.

Eine sich quer zur Rohrrichtung, beispielsweise im Wesentlichen senkrecht dazu, erstreckende Trennwand kann beispielsweise auch in einer Ebene mit dem Steg bzw. der Stegdichtung angeordnet werden, sodass beispielsweise eine spritzgegossene Durchführung durch eine Bewegung der Formwerkzeuge von der Ebene weg entformt werden kann.

Soll eine Leitung durch eine Durchführung mit Trennwand geführt werden, kann die Trennwand je nach Materialbeschaffenheit beispielsweise mit einem Hammer ausgeschlagen oder mit einem Schneidwerkzeug ausgetrennt werden.

Vorzugsweise ist eine das Austrennen der Trennwand erleichternde Sollbruchstelle vorgesehen, beispielsweise in einem Übergangsbereich von Trennwand zu Rohrelement. Dazu kann beispielsweise lokal eine in Rohrrichtung gemessene Dicke der Trennwand verringert, also eine Kerbe ausgebildet sein; diese kann etwa parallel zu einer Innenwand des Rohrelements verlaufend, auch direkt an diese grenzend, und vorzugsweise vollständig umlaufend ausgestaltet sein.

Eine weitere Ausführungsform betrifft ein Rohrelement mit einem darin vorgesehenen Anschlag, bis zu weichem ein zusätzliches Rohr einschiebbar ist. Zum Schutz vor Umwelteinflüssen oder mechanischer Beschädigung werden Leitungen im Außenbereich nämlich oftmals in sogenannten Schutzrohren an ein Wandelement herangeführt. sodass der Anschlag eine bevorzugte Position für ein einzuschiebendes Schutzrohr vorgeben und so dessen adäquaten Sitz gewährleisten kann.

Dabei kann das Schutzrohr auch zusätzlich gegen das Rohrelement gedichtet werden, etwa mit einem in das Rohrelement eingeschobenen, dann zwischen dessen Innenwand und dem Schutzrohr angeordneten Elastomerkörper; an diesem kann ferner endseitig ein sich quer zur Rohrrichtung erstreckender Anschlag vorgesehen sein, bis zu welchem der Elastomerkörper einschiebbar Ist und der dann an einer Stirnseite des Rohrelements bzw. an einer Wandfläche anliegen kann.

Generell hat das Rohrelement über seine Länge in Rohrrichtung nicht notwendigerweise eine konstante Querschnittsform, im Falle eines Rohrelements mit kreisförmigem Querschnitt kann also beispielsweise auch eine Durchmesseränderung erfolgen, etwa um die Wandstärke eines Schutzrohres auszugleichen. Es kann beispielsweise ein Ende der Durchführung zur Aufnahme eines Schutzrohres mit einer bestimmten Wandstärke ausgelegt sein und der Durchmesser dann um die zweifache Wandstärke verringert werden, sodass (sofern die Rohrelementabschnitte unterschiedlichen Durchmessers koaxial angeordnet sind) zwischen dem Rohrelementabschnitt kleineren Durchmessers und der Innenwand des Schutzrohres kein Durchmessersprung erfolgt und dementsprechend die Gefahr reduziert wird, dass sich ein Kabel beim Durchführen verfängt.

Vorzugsweise erfolgt der Durchmessersprung zwischen den beiden Rohrelementabschnitten abrupt, werden diese also durch einen sich im Wesentlichen senkrecht zur Rohrrichtung erstreckenden Abschnitt verbunden, der idealerweise gleichzeitig als Anschlag dienen kann.

Eine weitere Ausführungsform, die auch unabhängig von den Merkmalen des Hauptanspruchs als Erfindung gesehen wird und in dieser Form offenbart sein soll, betrifft eine Durchführung mit einem in ein Rohrende einsetzbaren, in seiner Position in Rohrrichtung verstellbaren Stopfen, der infolge der Verstellung unterschiedlich weit aus dem Rohrelement herausragen kann. Dieser Stopfen aus beispielsweise Styropor weist eine erste, sich entlang der Rohrrichtung erstreckende und dann zumindest teilweise an einer Rohrinnenwandfläche anliegende Außenfläche und vorzugsweise eine zweite, sich quer zur Rohrrichtung erstreckende Außenfläche auf (ohne die zweite Außenfläche könnte der Stopfen ein rohrförmiger Körper sein, was möglich, jedoch nicht bevorzugt ist). Der Abstand zwischen der zweiten Außenfläche und einem Rohrende und somit der außerhalb des Rohrelements liegende Anteil der ersten Außenfläche kann variiert werden, vorzugsweise durch eine Verschiebung des Stopfens in Rohrrichtung.

Der in der Durchgangsöffnung verstellbare Stopfen kann dann beim Vergießen mit fließfähigem Material auch über das Rohrende hinaus eine Durchgangsöffnung freihalten, sodass die Länge der Durchführung (allenfalls) eine minimale Wanddicke vorgibt und in einer dickeren Wand dann das Rohrelement zusammen mit dem entsprechend positionierten Stopfen eine Durchgangsöffnung freihält.

Dabei wird die zweite Außenfläche des Stopfens zu dem Rohrende beabstandet, nach dem Vergießen an eine Seitenfläche des Wandelements grenzend, also beispielsweise zunächst an einer Schalung anliegend, vorgesehen, sodass die erste Außenfläche des Stopfens in dem dann erstarrten Material eine Durchgangsöffnung von dem Rohrende zu der Seitenfläche des Wandelements freihält. Selbstverständlich können auch beide Rohrenden entsprechend verlängert, also zwei Stopfen vorgesehen werden.

Vorteilhafterweise können so mit einem einzigen Durchführungstyp eine Vielzahl Wandelementdicken realisiert werden, ist also die Flexibilität erhöht; dies ist auch in Kostenhinsicht vorteilhaft, weil nicht notwendigerweise Durchführungen unterschiedlicher Länge hergestellt werden müssen, also etwa im Falle einer spritzgegossenen Durchführung die Zahl der Formwerkzeuge reduziert werden kann.

Eine die Flexibilität hinsichtlich der möglichen Wanddicken weiter erhöhende Ausführungsform betrifft ein Ablängen des Rohrelements zur Anpassung an eine Wandelementdicke, weil so eine minimale Wanddicke nicht mehr durch die ursprüngliche Rohrelementlänge begrenzt wird. Für das Ablängen können beispielsweise außenseitig an dem Rohrelement Markierungen vorgesehen sein, die etwa standardisierten Wanddicken entsprechen können.

Bevorzugt ist für das Ablängen an dem Rohrelement eine Sollbruchstelle vorgesehen, besonders bevorzugt ist eine außenseitig, idealerweise umlaufende Kerbe.

Die Erfindung betrifft auch die Verwendung einer Durchführung mit einem Rohrelement, an dem außenseitig ein sich von dem Rohrelement weg erhebender Steg mit einem Verbindungselement vorgesehen ist, und zwar zum Einbau in ein Wand- oder Bodenelement. Dabei ist die senkrechte Projektion des Stegs auf das Rohrelement zu dessen beiden Enden beabstandet, sodass der Steg erfindungsgemäß innerhalb des Wandelements angeordnet, also als Ganzes von dem erstarrten Material formschlüssig umschlossen werden kann. Es liegt dann bezogen auf die Rohrrichtung beidseits des Stegs erstarrtes Material vor, also beidseits einer den Steg schneidenden, zur Rohrrichtung senkrechten Ebene.

Generell ist für den Einbau fließfähiges Material, welches dann erstarrt und an einer Außenfläche des Rohrelements von gegebenenfalls einem schrumpfungsbedingten Spalt abgesehen formschlüssig anliegt, bevorzugt, wenngleich auch ein Einbau durch Verschäumen, etwa mit PU-Schaum, möglich wäre. Besonders bevorzugt ist das fließfähige und dann erstarrende Material Beton oder Mörtel, wobei beide als Bindemittel Zement enthalten, der nach einem Anrühren mit Wasser infolge chemischer Reaktionen erstarrt.

Die Erfindung betrifft auch die Herstellung eines als Fertigbauteil ausgelegten Wand-oder Bodenelements, das aus einem fließfähigen und dann erstarrenden Material hergestellt wird. Dabei wird eine erfindungsgemäße Durchführung in einer für die Herstellung des Wand. oder Bodenelements vorgesehenen Schalung positioniert, gegebenenfalls nach einem Ablängen oder in Kombination mit (einem) verlängernden Stopfen. und hält in dem dann erstarrten Material eine Durchgangsöffnung frei.

Im Folgenden wird die Erfindung anhand eines Ausführungsbeispiels näher erläutert, wobei die einzelnen Merkmale auch in anderen Kombinationen erfindungswesentlich sein können und sich implizit auf alle Kategorien der Erfindung beziehen.
- Figur 1: zeigt eine Durchführung mit Rohrelement in Schrägansicht,
- Figur 2: veranschaulicht eine aufgeschnittene Durchführung gemäß Figur 1 in Schrägansicht,
- Figur 3: zeigt einen Schnitt der Durchführung gemäß Figur 1 senkrecht zur Rohrrichtung blickend,
- Figur 4: zeigt einen Schnitt einer Durchführung mit eingeschobenem Schutzrohr und durchgeführtem Kabel,
- Figur 5: illustriert in einem Schnitt eine mit Stopfen verlängerte Durchführung in einer Schalung,
- Figur 6: zeigt ein aus vier Durchführungen zusammengesetztes Modul,
- Figur 7: zeigt die Durchführung gemäß Figur 1 in Rohrrichtung blickend,
- Figur 8: veranschaulicht die Durchführung gemäß Figur 1 senkrecht zur Rohrrichtung blickend,
- Figur 9: zeigt ein Modul gemäß Figur 6 aus einer Blickrichtung senkrecht zur Rohrrichtung.

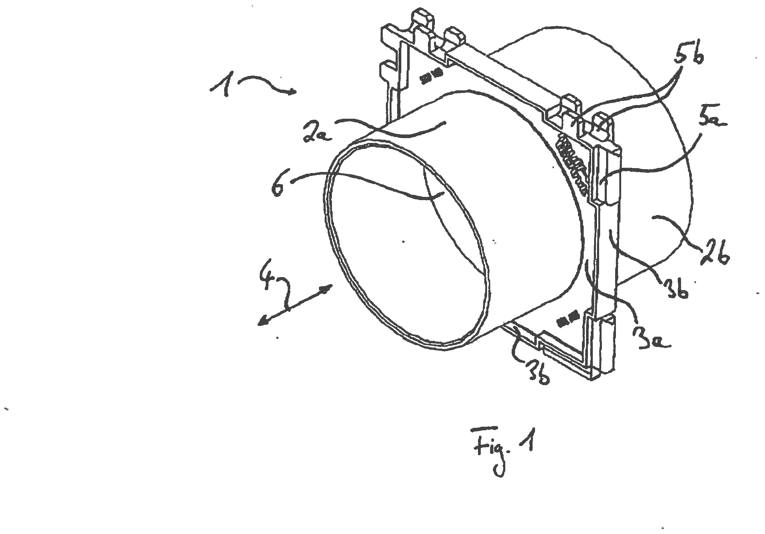

Figur 1 zeigt eine erfindungsgemäße Durchführung 1 mit einem Rohrelement 2, das aus einem in der Abbildung vorderen ersten Abschnitt 2a geringeren Durchmessers und einem in der Abbildung hinteren Abschnitt 2b größeren Durchmessers einstückig aufgebaut ist. Im Bereich des Durchmessersprungs erhebt sich außenseitig ein hier als umlaufende Stegdichtung ausgebildeter Steg 3 senkrecht zur Rohrrichtung 4 von dem Rohrelement 2 weg.

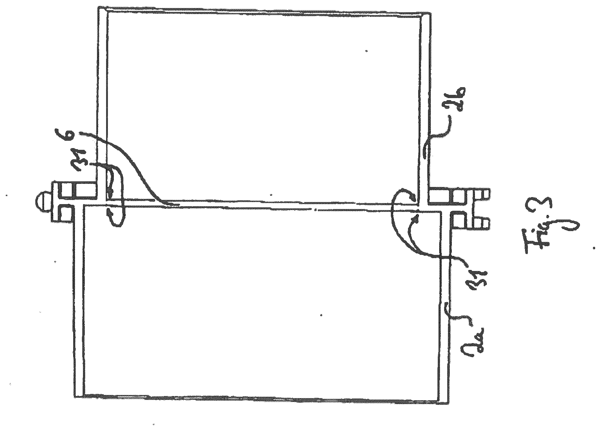

An den sich senkrecht zur Rohrrichtung 4 erstreckenden ersten Abschnitt 3a der Stegdichtung 3 schließt ein zweiter, sich T-förmig in Rohrrichtung 4 von dem ersten Abschnitt 3a weg erstreckender Abschnitt 3b an, wodurch nachstehend anhand von Figur 3 im Detail erläuterte Kriechwege entlang der dem Wandelement zugewandten Außenseite des Rohrelements 2 verlängert werden.

Des Weiteren sind an einem dem Rohrelement 2 abgewandten freien Rand der Stegdichtung 3 Verbindungselemente 5 vorgesehen, und zwar von einem ersten, langgestreckt zapfenförmigen Typ 5a und einem zweiten, zur Umklammerung des ersten vorgesehenen Typs 5b.

In der Durchgangsöffnung des Rohrelementabschnitts 2a, die in Rohrrichtung 4 blickend eine kreisförmige und hier aus zeichenprogrammtechnischen Gründen als Polygonzug wiedergegebene Querschnittsform hat, ist eine das Rohrelement 2 verschließende Trennwand 6 vorgesehen.

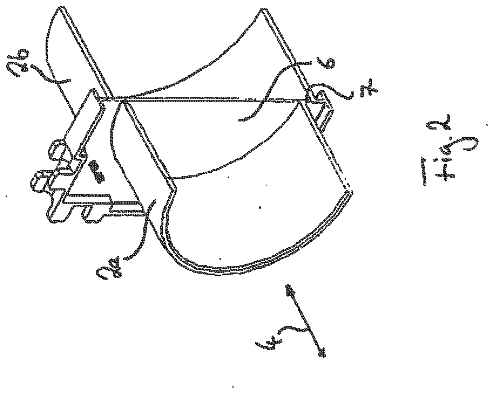

Die Trennwand 6 Ist wie auch der Durchmessersprung in Figur 2 in einer Schnittdarstellung zu erkennen; die Schnittebene ist parallel zur Rohrrichtung 4 orientiert und beinhaltet eine Mittenachse des Rohrelements 2. Der Durchmessersprung erfolgt abrupt, sodass die Rohrelementabschnitte 2a und b durch einen sich senkrecht zur Rohrrichtung 4 erstreckenden Abschnitt 7 verbunden sind. Dieser ergibt einen Anschlag, bis zu welchem ein (nicht gezeigtes) Schutzrohr in das dem Betrachter abgewandte Ende des Rohrelements 2 eingeschoben werden kann.

Bei einem nachstehend noch näher erläuterten Einbau der Durchführung 1 in ein Wandelement kann diese aufgrund der Trennwand 6 zunächst auch nur optional vorgesehen sein. In diesem Fall verschließt die Trennwand 6 die Durchgangsöffnung, blockiert also beispielsweise einen Durchtritt von Feuchtigkeit, ohne dass eine zusätzliche, als Blindstopfen dienende Dichtung eingesetzt werden muss.

In Figur 3 ist senkrecht zur Rohrrichtung 4 blickend eine Schnittdarstellung gezeigt, wobei zwischen der Trennwand 6 und der Innenwand des Rohrelementabschnitts 2b Einkerbungen 31 zu erkennen sind, die eine das Austrennen der Trennwand 6 erleichternde Sollbruchstelle darstellen. Soll dann eine Leitung hindurchgeführt werden, kann die Trennwand 6 ausgeschlagen werden.

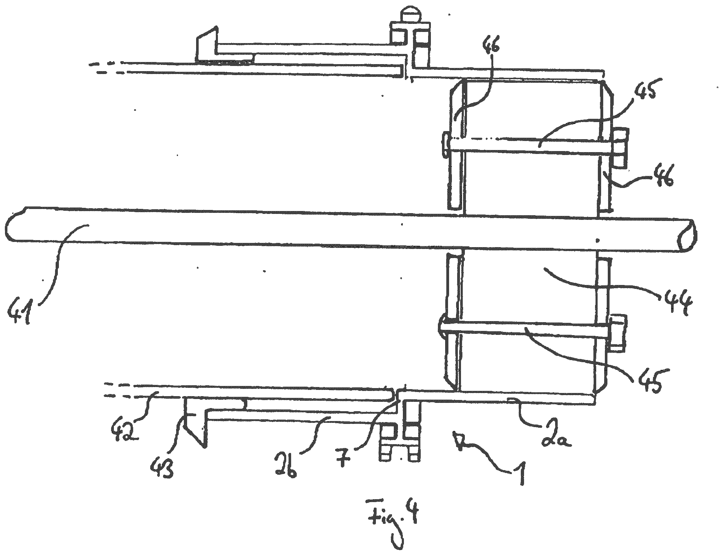

Nach dem Austrennen der Trennscheibe 6 kann wie in Figur 4 dargestellt eine Leitung 41 durch die Durchführung 1 geführt werden. Dabei wird die Leitung 41 typischerweise von einem gebäudeaußenseitigen Bereich her, also in Figur 4 von links, eingeführt und ist gebäudeaußenseitig in einem Schutzrohr 42 geführt, das bis zu dem Anschlag 7 in den Rohrelementabschnitt 2b eingeschoben werden kann. Eine auf das Schutzrohr 42 aufgeschobene, umlaufende Elastomerdichtung 43 dichtet das Schutzrohr 42 dann gegen den Rohrelementabschnitt 2b.

Da der Innendurchmesser des Rohrelementabschnitts 2a an den Innendurchmesser des Schutzrohres angepasst ist, entsteht am Anschlag 7 keine Kante, an der sich die Leitung 41, die nach dem Einschieben des Schutzrohres 42 hindurchgeführt wird, verfangen könnte.

Nach dem Hindurchführen der Leitung 41 wird von der Gebäudeinnenseite her eine Pressdichtung mit einem Elastomerkörper 44, der zwischen mit Spannbolzen 45 gegeneinander verspannbaren Spannplatten 46 gehalten ist, eingeschoben. Nach der Positionierung in dem Rohrelementabschnitt 2a wird der Elastomerkörper 44 mittels Spannbolzen 45 und Spannplatten 46 in Rohrrichtung 4 komprimiert und expandiert dabei senkrecht zur Rohrrichtung 4, legt sich also dichtend an die Innenwand des Rohrelementabschnitts 2a und die Leitung 41.

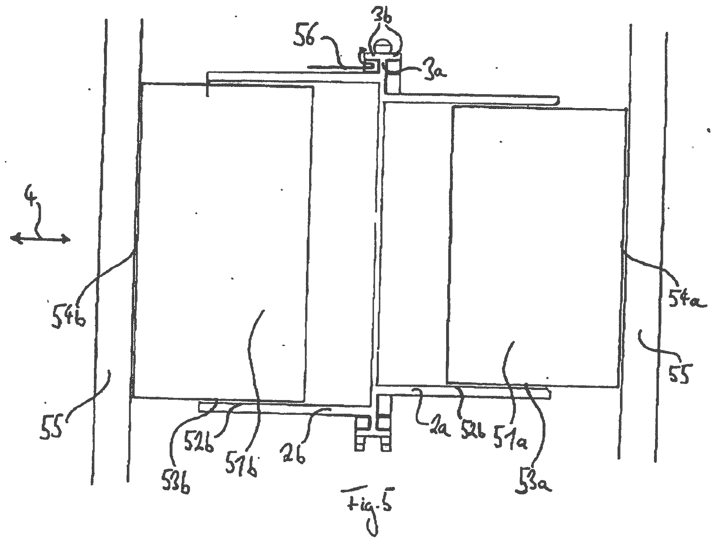

Figur 5 illustriert den Einbau einer erfindungsgemäßen Durchführung in ein Wandelement, wobei für eine endseitige Verlängerung des Rohrelements 2 Stopfen 51 vorgesehen sind, weil die herzustellende Wand dicker als das Rohrelement 2 lang ist. Die Stopfen 51 haben jeweils eine erste, sich parallel zu dem jeweiligen Rohrelementabschnitt 2a, b erstreckende und flächig an der jeweiligen Innenwand 52a, b anliegende Außenfläche 53a, b und eine zweite, sich senkrecht zur ersten erstreckende Außenfläche 54a, b.

Zur Anpassung an die Dicke des Wandelements sind die Stopfen 51a, b aus verfestigtem Schaum (Polystyrol) dann soweit aus dem jeweiligen Rohrelementabschnitt 2a, b herausgezogen, dass sie jeweils mit der zweiten Außenfläche 54a, b an einer für ein Vergießen mit Beton vorgesehenen Schalung 55 anliegen. Wird die Schalung 55 mit die Durchführung 1 formschlüssig umschließendem Beton befüllt, halten die jeweils außerhalb des Rohrelements 2 liegenden Abschnitte der Stopfen 51a. b das Rohrelement 2 beidseits verlängernde Durchgangsöffnungen frei. Vorliegend ist die Durchführung in etwa mittig des Wandelements angeordnet und sind die Stopfen 51a, b dementsprechend Im Wesentlichen gleich weit aus dem jeweiligen Rohrelementabschnitt 2a, b herausgezogen.

In Figur 5 oben ist ferner illustriert, wie durch den ersten Abschnitt 3a der Stegdichtung und den zweiten, sich T-förmig davon weg erstreckenden Abschnitt 3b ein möglicher Kriechweg 56 entlang der Außenseite des Rohrelements 2 verlängert wird.

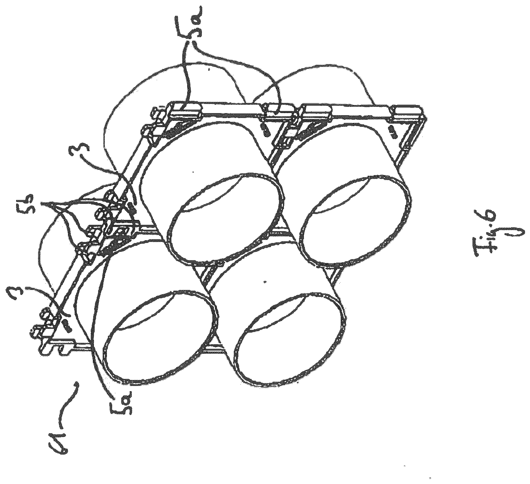

Figur 6 zeigt ein aus vier Durchführungen 1 zusammengesetztes Durchführungsmodul 61. Dabei sind die Durchführungen 1 über die an ihren Stegdichtungen 3 vorgesehenen Formschlusselemente 5a, b, also nur über die Stegdichtungen 3, miteinander verbunden; ansonsten erstrecken sich die Rohrelemente 2 unabhängig voneinander, teilen also insbesondere keine Seitenwände. Zur Verbindung von zwei Durchführungen 1 werden diese zunächst so orientiert, dass zueinander komplementäre Formschlusselemente 5a, b einander gegenüberliegen. Werden die Durchführungen 1 dann senkrecht zur Rohrrichtung 4 aufeinander zubewegt, spreizt ein verdicktes Ende des langgestreckten Zapfens 5a die Klammern 5b zunächst auseinander und verrastet dann in einer komplementären Ausnehmung. Aufgrund der Materialeiastizität nehmen die Klammern 5a nach dem Aufspreizen soweit möglich ihre ursprüngliche Position wieder ein und halten somit den Zapfen formschlüssig. Diese formschlüssige Verbindung kann jedoch unter Kraftaufbringung auch wieder gelöst wer den.

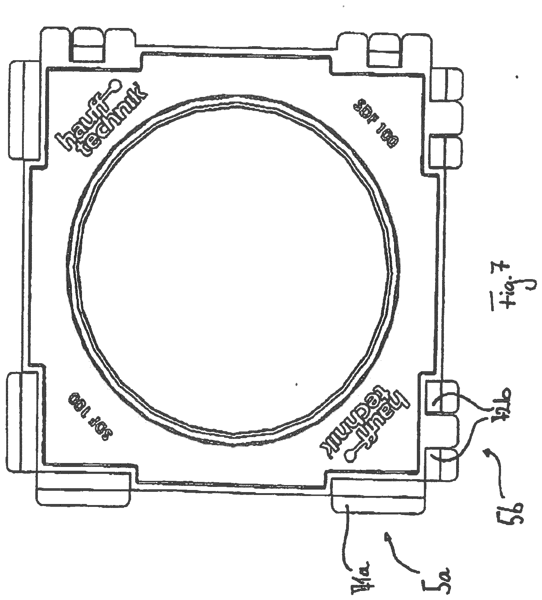

In Figur 7 ist eine Durchführung 1 mit Stegdichtung 3 und Formschlusselementen 5 in einer Aufsicht in Rohrrichtung 4 blickend dargestellt. Die Stegdichtung 3 hat eine quadratische Außenform, wobei an jeder der vier Seitenlinien jeweils zwei Formschlusselemente 5a, b vorgesehen sind, und zwar jeweils an die Ecken des Quadrats grenzend.

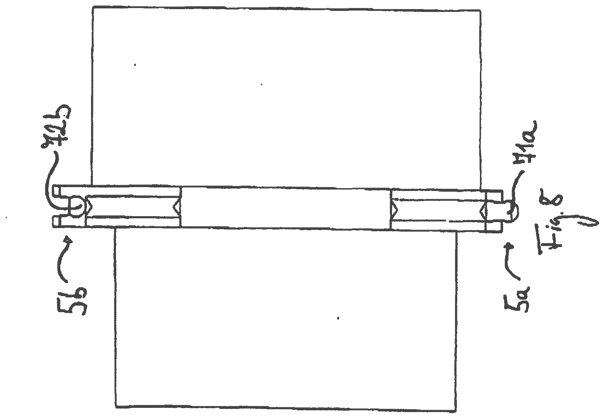

Die zapfenförmigen Formschlusselemente 5a sind zu einem freien Ende 71a hin verdickt ausgebildet (vgl. Figur 8), wobei in einem zusammengesetzten Modul 61 das verdickte Ende 71 a in einer dazu komplementären Ausnehmung 72b der Klammern 5b zum Liegen kommt.

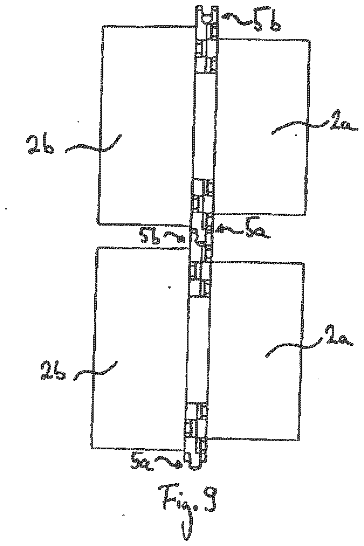

Dies ist in Figur 9 in einer Seitenansicht senkrecht zur Rohrrichtung 4 blickend dargestellt.

## Patentansprüche

1. Durchführung (1) zum Einbau in ein Wand- oder Bodenelement, mit einem Rohrelement (2), durch welches eine Leitung (41) hindurchführbar ist und an dem außenseitig ein sich von dem Rohrelement (2) weg erhebender Steg (3) vorgesehen ist, der einstückig mit dem Rohrelement (2) ausgebildet ist,
wobei der Steg (3) ein doppelt als ein erstes (5a) und ein dazu komplementäres zweites Formschlusselement (5b) vorgesehenes Verbindungselement (5) aufweist, über das die Durchführung (1) mit einer zweiten Durchführung (1) verbindbar ist,
**dadurch gekennzeichnet, dass**
der Steg (3) mit dem Verbindungselement (5) zu den Enden des Rohrelements (2) beabstandet ist, also die senkrechte Projektion des Stegs (3) und des Verbindungselements (5) auf das Rohrelement (2) zu dessen Enden jeweils beabstandet ist.

2. Durchführung (1) nach Anspruch 1, bei welcher das Verbindungselement (5) einstückig mit dem Rohrelement (2) ausgebildet ist.

3. Durchführung (1) nach einem der vorstehenden Ansprüche, bei welcher der Steg (3) als umlaufende Stegdichtung ausgebildet ist.

4. Durchführung (1) nach Anspruch 3, bei der die Stegdichtung (3) in Rohrrichtung (4) gesehen eine polygonförmige Außenform hat und mit entsprechend polygonförmigen Stegdichtungen (3) weiterer Durchführungen sich flächig ergänzend zusammenbaubar ist.

5. Durchführung (1) nach Anspruch 3 oder 4, bei der an einem sich von dem Rohrelement (2) weg erhebenden ersten Abschnitt (3a) der Stegdichtung (3) ein zweiter, sich entlang der Rohrrichtung (4) von dem ersten Abschnitt (3a) weg erstreckender, vorzugsweise T-förmig in zwei Richtungen (4) davon weg erstreckender, Abschnitt (3b) vorgesehen ist.

6. Durchführung (1) nach einem der vorstehenden Ansprüche, bei der in dem Rohrelement (2) eine das Rohrelement (2) verschließende, einstückig mit dem Rohrelement (2) ausgebildete Trennwand (6) vorgesehen ist.

7. Durchführung (1) nach Anspruch 6, bei der eine Sollbruchstelle (31) für ein Austrennen der Trennwand (6) vorgesehen ist.

8. Durchführung (1) nach einem der vorstehenden Ansprüche, bei der in dem Rohrelement (2) ein Anschlag (7) vorgesehen ist, bis zu welchem ein zusätzliches Rohr (42) einschiebbar ist.

9. Durchführung (1) nach einem der vorstehenden Ansprüche mit einem in ein Rohrende einsetzbaren, in seiner Position in Rohrrichtung (4) verstellbaren Stopfen (51), der infolge der Verstellung unterschiedlich weit aus dem Rohrende herausragen kann.

10. Verwendung einer Durchführung (1) nach einem der vorstehenden Ansprüche zum Einbau in ein Wand- oder Bodenelement, wobei fließfähiges Material, vorzugsweise Beton oder Mörtel, welches dann erstarrt, den Steg als Ganzes (3) formschlüssig umschließt.

11. Verwendung nach Anspruch 10, wobei die Durchführung (1) über das Verbindungselement (5) mit einer zweiten Durchführung (1) verbunden wird.

12. Verwendung nach Anspruch 10 oder 11, wobei der Stopfen (51) das Innere des Rohrelements (2) und in Abhängigkeit von seiner aus dem Rohrende herausragenden Position auch eine Durchgangsöffnung in dem dann erstarrten Material außerhalb des Rohrendes freihält.

13. Verwendung nach einem der Ansprüche 10 bis 12, wobei das Rohrelement (2) zur Anpassung an eine Dicke des Wand- oder Bodenelements abgelängt wird.

14. Verfahren zur Herstellung eines als Fertigbauteil ausgelegten Wand- oder Bodenelements,
wobei eine Durchführung (1) nach einem der Ansprüche 1 - 9, auch in Verbindung mit einer Verwendung nach einem der Ansprüche 11 bis 13,
mit fließfähigem Material, vorzugsweise Beton oder Mörtel, welches dann erstarrt und die Stegdichtung (3) formschlüssig umschließt, in ein Wand- oder Bodenelement eingebaut wird.

## Claims

1. A duct (1) for an assembly in a wall or floor element, having a tube element (2), through which a conduit (41) can be led through, at the outside of which tube element (2) a protrusion (3) protruding from said tube element (2) is provided, which is formed integrally with said tube element (2), wherein said protrusion (3) comprises a connecting means (5) which is provided as a first form-fit element (5a) and a second form-fit element (5b) complementary thereto, by which connecting means (5) said duct (1) can be connected to a second duct (1),
**characterized in that**
said protrusion (3) with said connecting means (5) is remote to the ends of the tube element (2), the vertical projection of said protrusion (3) and of said of said connecting means (5) onto said tube element (2) being respectively remote to the ends of said tube element (2).

2. The duct (1) according to claim 1, wherein said connecting means (5) is formed integrally with said tube element (2).

3. The duct (1) according to one of the preceding claims, wherein said protrusion (3) is provided as a protruding sealing extending circumferentially.

4. The duct (1) according to claim 3, wherein said protruding sealing (3) has, seen in a tube direction (4), a polygonal outer shape and can be assembled together with protruding sealings (3) of further ducts (1), which are correspondingly polygonal, in a manner complementing each other.

5. The duct (1) according to claim 3 or 4, wherein said protruding sealing (3) comprises a first section (3a) and a second section (3b), said first section (3a) protruding from said tube element (2) and said second section (3b) protruding from said first section (3a) in said tube direction (4), protruding from said first section (3a) preferably T-shaped in two directions (4).

6. The duct (1) according to one of the preceding claims, wherein a dividing wall (6) is provided in said tube element (2), which closes said tube element (2) and is integrally formed with said tube element (2).

7. The duct (1) according to claim 6, wherein a predetermined breaking point (31) is provided for a removal of said dividing wall (6).

8. The duct (1) according to one of the preceding claims, wherein a stop (7) is provided in said tube element (2), up to which stop an additional tube (42) can be pushed in.

9. The duct (1) according to one of the preceding claims, comprising a plug (51) which can be inserted into an end of said tube element (2) and can be adapted in its position with respect to said tube direction (4), wherein said plug (51) protrudes to a different extend from said end of said tube element (2) in dependence of said adaption.

10. Use of a duct (1) according to one of the preceding claims for an insertion into a wall or floor element, wherein a material which can be poured before hardening, preferably concrete or mortar, encloses said protrusion (3) as a whole by a form-fit.

11. The use according to claim 10, wherein said duct (1) is connected to a second duct (1) by said connecting means (5).

12. The use according to claim 10 or 11, wherein a plug (51) keeps the inner of said tube element (2) free of said material which can be poured and, preferably, in dependence of its position protruding from said end of said tube element (2), keeps free a through-hole in said material when hardened beyond said end of said tube element (2).

13. The use according to one of claims 10 to 12, wherein said tube element (2) is shortened for an adaption to a thickness of said wall or floor element.

14. A method for manufacturing a wall or floor element being adapted as a finished building fabric,
wherein a duct (1) according to one of claims 1 to 9, if applicable also in combination with a use according to one of claims 11 to 13,
is structurally integrated into a wall or floor element by a material which can be poured before hardening, preferably concrete or mortar, which encloses said protrusion (3) by a form-fit.

## Revendications

1. Passage (1) destiné à être encastré dans un élément de paroi ou de sol, comportant
un élément de tuyau (2) pouvant être parcouru par une ligne ou conduite (41) et sur lequel il est prévu, sur son côté extérieur, un segment (3) qui s'élève en s'écartant de l'élément de tuyau (2) et qui est conçu d'un seul tenant avec l'élément de tuyau (2),
dans lequel le segment (3) présente un double élément de raccordement (5) prévu sous la forme d'un premier élément à complémentarité de forme (5a) et d'un second élément à complémentarité de forme (5b) complémentaire de ce dernier, grâce auxquels le passage (1) peut être raccordé à un deuxième passage (1),
**caractérisé en ce que**
le segment (3) comportant l'élément de raccordement (5) est écarté des extrémités de l'élément de tuyau (2), c'est-à-dire que la projection à la perpendiculaire du segment (3) et de l'élément de raccordement (5) sur l'élément de tuyau (2) est respectivement écartée de ses extrémités.

2. Passage (1) selon la revendication 1, dans lequel l'élément de raccordement (5) est constitué d'un seul tenant avec l'élément de tuyau (2)

3. Passage (1) selon l'une des revendications précédentes, dans lequel le segment (3) est constitué sous la forme d'un élément d'étanchéité de segment circonférentiel.

4. Passage (1) selon la revendication 3, dans lequel l'élément d'étanchéité de segment (3), vu dans le sens du tuyau (4), présente une forme extérieure polygonale et est modulable avec des éléments d'étanchéité de segment (3) de forme polygonale correspondante d'autres passages en gagnant ainsi en superficie.

5. Passage (1) selon la revendication 3 ou 4, dans lequel il est prévu, sur une première section (3a) de l'élément d'étanchéité de segment (3) qui s'élève en s'écartant de l'élément de tuyau (2), une deuxième section (3b) qui s'élève le long du sens du tuyau (4) en s'écartant de la première section (3a) et qui présente de préférence une forme de T en s'en écartant dans deux directions (4).

6. Passage (1) selon l'une des revendications précédentes, dans lequel il est prévu, dans l'élément de tuyau (2), une cloison (6) constituée d'un seul tenant avec l'élément de tuyau (2) et qui obstrue l'élément de tuyau (2).

7. Passage (1) selon la revendication 6, dans lequel il est prévu un point de rupture de consigne (31) en vue de la séparation de la cloison (6).

8. Passage (1) selon l'une des revendications précédentes, dans lequel il est prévu une butée (7) dans l'élément de tuyau (2) jusqu'à laquelle un tuyau (42) supplémentaire peut être introduit.

9. Passage (1) selon l'une des revendications précédentes, comportant un bouchon (51) susceptible d'être inséré dans une extrémité de tuyau et d'être réglé dans sa position dans le sens du tuyau (4) pour, suite au réglage, pouvoir faire plus ou moins saillie hors de l'extrémité du tuyau.

10. Utilisation d'un passage (1) selon l'une des revendications précédentes, destiné à être encastré dans un élément de paroi ou de sol, dans laquelle un matériau coulable, de préférence du béton ou du mortier, qui durcit ensuite, englobe le segment formant un tout (3) par complémentarité de forme.

11. Utilisation selon la revendication 10, dans laquelle le passage (1) est relié à un deuxième passage (1) par l'intermédiaire de l'élément de raccordement (5).

12. Utilisation selon la revendication 10 ou 11, dans laquelle un bouchon (51) maintient dégagés l'intérieur de l'élément de tuyau (2) ainsi que, en fonction de sa position de saillie hors de l'extrémité de tuyau, une ouverture de passage existant dans le matériau alors durci en dehors de l'extrémité du tuyau.

13. Utilisation selon l'une des revendications 10 à 12, dans laquelle l'élément de tuyau (2) est mis à la longueur adéquate par rapport à l'épaisseur de l'élément de paroi ou de sol.

14. Procédé de production d'un élément de paroi ou de sol conçu sous la forme d'un élément préfabriqué,
dans lequel un passage (1) selon l'une des revendications 1 à 9, y compris en association avec une utilisation selon l'une des revendications 11 à 13, est encastré dans un élément de paroi ou de sol avec un matériau coulable, de préférence du béton ou du mortier, qui durcit ensuite et englobe l'élément d'étanchéité de segment (3) par complémentarité de forme.
